# EUROPÄISCHE PATENTANMELDUNG

(11) **EP 1 589 233 A1**
(43) Veröffentlichungstag der Anmeldung: **26.10.2005**
(21) Anmeldenummer: 04101606.4
(22) Anmeldetag: 19.04.2004
(51) Int. Cl.: F15B 11/12, F15B 15/12, F16H 61/30

(54) **Kolbenmotor mit Positionssperre**

(71) Anmelder: Getrag Ford Transmissions GmbH, 50725 Köln (DE)
(72) Erfinder: Schwekutsch, Michael, 45711, Datteln (DE)
(74) Vertreter: Drömer, Hans-Carsten

(57) **Zusammenfassung**

Die Erfindung betrifft einen Motor (1) mit wenigstens einem Kolben (2) und wenigstens einer Druckkammer (4), in der der Kolben (2) zwischen zwei Endpositionen hin und her bewegbar ist, wobei der Kolben (2) die Druckkammer (4) in einen ersten Teilraum (8) und einen zweiten Teilraum (9) unterteilt. Bei einer Bewegung des Kolbens (2) in eine Richtung wird der erste Teilraum (8) größer und der zweite Teilraum (9) kleiner, wobei der erste Teilraum (8) eine erste Öffnung (10) und der zweite Teilraum (9) eine zweite Öffnung (11) zum Einleiten beziehungsweise zum Ablassen eines Druckmediums aufweisen. Der Motor (1) zeichnet sich dadurch aus, dass der Kolben (2) bei der Bewegung in eine Richtung durch Erreichen einer zwischen den zwei Endpositionen liegenden Sperrposition eine lösbare Sperre aktiviert, die eine weitere Bewegung des Kolbens (2) in die gleiche Richtung verhindert.

## Beschreibung

Die Erfindung betrifft einen Kolbenmotor mit wenigstens einem Kolben und wenigstens einer Druckkammer, in der der Kolben zwischen zwei Endpositionen hin und her bewegbar ist, wobei der Kolben die Druckkammer in zwei Teilräume unterteilt.

Ein derartiger Kolbenmotor ist beispielsweise aus der EP 1 251 299 bekannt. Der dort offenbarte Kolbenmotor ist in Form eines Schwenkflügelmotors mit einem um eine Achse drehbaren Rotationskolben oder Schwenkflügel ausgeführt. Der Schwenkflügel unterteilt die Druckkammer in zwei Teilräume, sodass bei einer Bewegung des Schwenkflügels in eine Drehrichtung der eine Teilraum größer und der andere Teilraum kleiner wird. Jeder Teilraum weist eine Öffnung auf, durch die eine hydraulische Flüssigkeit geleitet werden kann. Wird nun ein Teilraum mittels der hydraulischen Flüssigkeit mit Druck beaufschlagt, während durch die Öffnung des anderen Teilraums die in diesem Teilraum befindliche hydraulische Flüssigkeit abgelassen wird, verändert der Kolben innerhalb der Druckkammer seine Position. Durch eine den beiden Öffnungen vorgeschaltete hydraulische Steuerung, die ein geregeltes Zuleiten und Ableiten des Druckmediums ermöglicht, kann die Position des Kolbens zwischen den beiden Endpositionen genau festgelegt werden.

Der Schwenkflügelmotor aus der EP 1 251 299 wird als Antrieb einer Schaltwalze genutzt. Die Schaltwalze weist dabei einen zylindrischen Walzenkörper auf, dessen Mantelfläche eine Steuerkurve trägt. In diese Steuerkurve greift ein Kulissenstein, der von einem Arm absteht, der drehfest und in axialer Richtung fest mit einer Schaltwelle eines automatisierten Handschaltgetriebes eines Kraftfahrzeuges verbunden ist. Dreht sich die mit dem Kolben drehfest verbundene Schaltwalze, wird mittels des Kulissensteins und des Arms die Schaltwelle je nach Form der Steuerkurve axial verschoben und/oder um ihre Längsachse gedreht. Durch die Bewegung des hydraulisch gesteuerten Kolbens lassen sich somit eine Schaltgasse wählen sowie ein Gang einlegen.

Die Steuerkurve an der Mantelfläche ist so ausgelegt, dass über den Schwenkflügelmotor auch ein Rückwärtsgang des automatisierten Handschaltgetriebes eingelegt werden kann. Dem eingelegten Rückwärtsgang entspricht dabei eine bestimmte Lage des Kolbens innerhalb der Druckkammer. Wenn die den beiden Öffnungen vorgeschaltete hydraulische Steuerung des Kolbens fehlerbehaftet arbeitet, besteht die Gefahr, dass der Rückwärtsgang unbeabsichtigt eingelegt wird, was zu einem großen Schaden führen kann.

Der Erfindung liegt daher die Aufgabe zugrunde, einen Kolbenmotor bereitzustellen, bei dem die Gefahr einer nicht beabsichtigten Lage des Kolbens zwischen den beiden Endpositionen auf einfache Weise deutlich reduziert wird.

Die der Erfindung zugrunde liegende Aufgabe wird mit dem Motor gemäß des Anspruchs 1 gelöst. Dadurch, dass der Kolben bei der Bewegung in eine Richtung eine Sperrposition erreicht, bei der eine Sperre aktiviert wird, die eine weitere Bewegung des Kolbens verhindert, wird sichergestellt, dass der Kolben - auch bei einem Fehler der bekannten hydraulischen Steuerung - sich nicht über die Sperrposition hinaus bewegen kann. Die Position oder die Positionen des Kolbens, die jenseits der Sperrposition liegen, werden durch die aktivierte Sperre geschützt. Die Bewegung des Kolbens wird somit auf einen Hub zwischen einer der beiden Endpositionen und der Sperrposition sicher begrenzt.

Damit die durch die Sperre geschützte Position oder die geschützten Positionen durch den Kolben erreicht werden können, kann ein Mittel vorgesehen sein, dass die Sperre löst beziehungsweise ein Aktivieren der Sperre durch den Kolben erst gar nicht ermöglicht.

In einem bevorzugten Ausführungsbeispiel weist der Motor wenigstens eine Zusatzöffnung auf, die zum Einleiten und/oder Ablassen des Druckmediums dient und die der Kolben bei Erreichen der Sperrposition verschließt. Wird beispielsweise das Druckmedium in den ersten Teilraum geleitet, wird der Kolben in eine Richtung bedrückt, wobei aufgrund der Volumenabnahme in dem zweiten Teilraum der Druck des dort befindlichen Druckmediums ansteigt. Bei einem inkompressiblen Druckmedium wie beispielsweise Hydrauliköl steigt der Druck in dem zweiten Teilraum sprunghaft an, wenn das Druckmedium im zweiten Teilraum nicht abgelassen wird.

Wenn das Druckmedium dabei ausschließlich durch die Zusatzöffnung und nicht durch die zweite Öffnung abgelassen wird, ist eine Bewegung des Kolbens nur soweit möglich, bis dieser die Zusatzöffnung verschließt. Das dann in dem zweiten Teilraum noch befindliche Druckmedium verhindert eine weitere Reduzierung des zweiten Teilraums und somit eine weitere Bewegung des Kolbens. Auch wenn als Druckmedium beispielsweise Druckluft verwendet würde, kommt es zu der erfindungsgemäßen Sperre, die jedoch mit Verschluss der Zusatzöffnung nicht plötzlich, sondern kraftabhängig durch den kontinuierlichen Druckanstieg in dem zweiten Teilraum ihre Wirkung entfaltet.

Vorzugsweise weist das Mittel zum Lösen der Sperre ein Ventil auf, das der zweiten Öffnung vorgeschaltet ist. Ist das Ventil geschlossen, kann aus dem zweiten Teilraum das dort befindliche Druckmedium nur durch die Zusatzöffnung abgelassen werden. In diesem Fall wird die Sperre aktiviert, wenn der Kolben die Sperrposition erreicht. Wird das Ventil nun geöffnet, kann aus dem zweiten Teilraum das dort befindliche Druckmedium abgeführt werden, ohne dass es dazu der Zusatzöffnung bedarf. Somit wird durch Öffnen des Ventils die Sperre gelöst.

Vorzugsweise weist der Motor eine Steuerung zum Öffnen und Schließen von Ventilen auf, die der ersten und zweiten Öffnung sowie der Zusatzöffnung vorgeschaltet sind. Durch die Ansteuerung der Ventile lässt sich die Menge des Druckmediums, die durch eine der Öffnungen geleitet wird, genau steuern. Dadurch kann die Lage des Kolbens in der Druckkammer exakt festgelegt werden, sodass der Kolben als Stellglied einer mechanischen Stelleinheit dienen kann.

In einem bevorzugten Ausführungsbeispiel ist in einem Normalbetrieb der Steuerung das der zweiten Öffnung vorgeschaltete Ventil geschlossen. In diesem Fall wird bei einem kleiner werdenden zweiten Teilraum das Druckmedium ausschließlich durch die Zusatzöffnung abgelassen. Der Kolben kann sich bis zu der Sperrposition und nicht darüber hinaus bewegen. Die Position jenseits der Sperrposition des Kolbens ist durch das verschlossene Ventil im Normabetrieb gesondert abgesichert. Nur wenn das Ventil offen ist, kann sich der Kolben über die Sperrposition hinaus bewegen.

In einem bevorzugten Ausführungsbeispiel ist der Kolben als Rotationskolben beziehungsweise als Schwenkflügel ausgebildet. Der Kolben ist innerhalb eines Winkelbereiches um eine Drehachse verschwenkbar. Dabei kann jeweils ein Teilraum der ringförmigen Druckkammer durch zwei sich gegenüberstehende Stirnwände, durch eine Innenseite eines koaxial zur Drehachse angeordneten Zylindermantels, durch einen Radialsteg und durch den Kolben begrenzt werden. Der Radialsteg erstreckt sich wie der Kolben von der Innenseite des Zylindermantels zur Drehachse hin.

Um einen möglichst großen Schwenkbereich zu erhalten, sind in einem Ausführungsbeispiel die erste Öffnung und die zweite Öffnung in der Nähe des Radialstegs angeordnet, wobei der Radialsteg in Umfangsrichtung gesehen zwischen den beiden Öffnungen liegt. Die erste und zweite Öffnung können an einer Stirnwand oder an der Innenseite des Zylindermantels vorgesehen sein. Gleiches gilt auch für die Zusatzöffnung: Sie kann an einer Stirnwand oder an der Innenseite des Zylindermantels angeordnet sein.

Vorzugsweise ist der Kolben drehfest mit dem Zylindermantel verbunden. Schwenkt der Kolben um seine Drehachse, so dreht sich auch der Zylindermantel um einen gleichen Dreh- oder Schwenkwinkel um die Drehachse. Der Radialsteg und wenigstens eine der beiden Stirnwände stehen dabei fest.

In einem anderen Ausführungsbeispiel ist der Radialsteg drehfest mit dem Zylindermantel verbunden, wobei Zylindermantel und Radialsteg feststehen. Der Kolben ist an einer der beiden Stirnwände befestigt, sodass sich bei der Drehung des Kolbens diese ebenfalls um die Drehachse des Kolbens dreht.

Der Kolben kann einen radial verlaufenden Abschnitt und einen zylindrischen Kern umfassen, dessen Mittelachse mit der Drehachse des Kolbens zusammenfällt und sich in axialer Richtung erstreckt. Der zylindrische Kern und der Zylindermantel bilden die im Querschnitt ringförmige Druckkammer. Der Radialsteg kann sich von der Innenseite des Zylindermantels bis zur Außenfläche des zylindrischen Kerns erstrekken.

Alternativ kann der Radialsteg einen zylindrischen Kern umfassen, wobei in diesem Ausführungsbeispiel der Kolben mit einer radial nach innen gerichteten Innenfläche gegen die Außenseite des Kerns stößt. Bei einer Kolbenbewegung gleitet die Innenseite des Kolbens auf der Außenseite des Kerns entlang.

In einem bevorzugten Ausführungsbeispiel umfasst der Motor eine Schaltwalze für ein Schaltgetriebe. Vorzugsweise weist der Zylindermantel an einer Außenfläche wenigstens eine Steuerkurve auf. In die Steuerkurve kann mit einem ersten Ende ein Arm greifen. Das erste Ende des Arms hält dabei vorzugsweise einen Kulissenstein oder einen Steg. Mit einem zweiten Ende ist der Arm an der Schaltwelle befestigt.

Die Steuerkurve weist vorzugsweise in Umfangsrichtung und/oder in Radialrichtung des Zylindermantels ansteigende und abfallende Kurvenabschnitte auf. Dadurch wird bei Drehung der Schaltwalze der in die Steuerkurve greifende Kulissenstein oder Stift sowohl in Radialrichtung als auch in Umfangsrichtung bewegt, wodurch über den Arm die Schaltwelle axial verschoben und gedreht wird.

In einem Ausführungsbeispiel ist die Steuerkurve als Nut in dem Zylindermantel ausgeführt.

Anhand der in den Figuren beschriebenen Ausführungsbeispielen wird die Erfindung näher erläutert. Es zeigen:
- Fig. 1: schematisch im Querschnitt einen Motor in Form eines Schwenkflügelmotors;
- Fig. 2: den Schwenkflügelmotor der Fig. 1, wobei ein Schwenkflügel eine zu Fig. 1 geänderte Position inne hat;
- Fig. 3: eine hydraulische Basisansteuerung für den Schwenkflügelmotor der Fig. 1 und Fig. 2; und
- Fig. 4: im perspektivischen Teilschnitt den erfindungsgemäßen Motor in einer weiteren Ausführung.

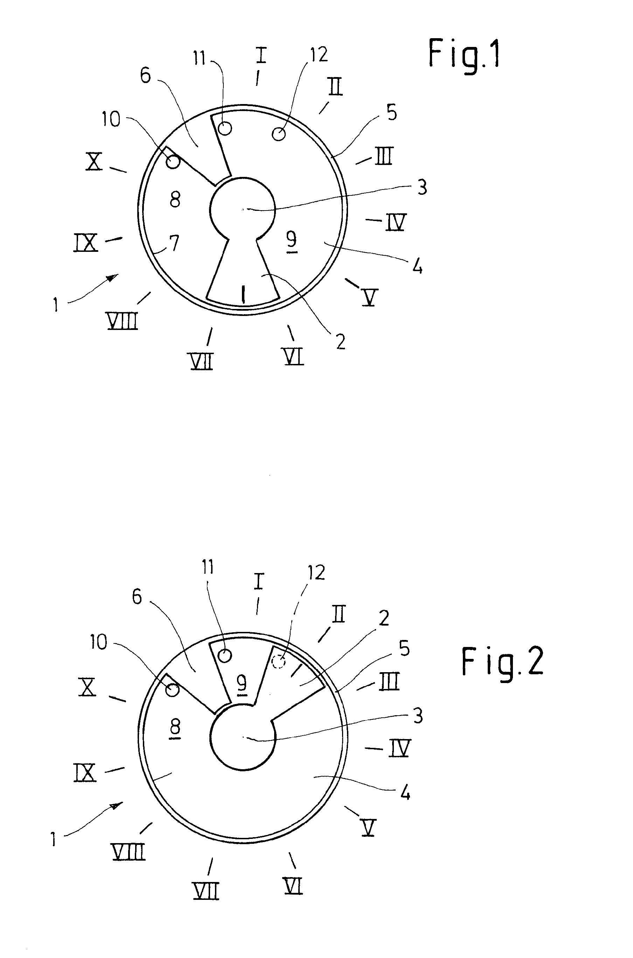

Fig. 1 zeigt einen Motor 1 mit einem Rotationskolben oder Schwenkflügel 2 im Querschnitt. Der Schwenkflügel 2 ist schwenkbar um eine Dreh- oder Schwenkachse 3 in einer zylindrischen Druckkammer 4 gelagert. Der Motor 1 weist einen koaxial zur Drehachse 3 angeordneten Zylindermantel 5 und einen daran einstückig angeformten Radialsteg 6 auf. Der Radialsteg 6 erstreckt sich in radialer Richtung von einer Innenseite 7 des Zylindermantels 5 bis zu einem dem Kolben 2 zugeordneten zylindrischen Kern.

Der Schwenkflügel 2 unterteilt die Druckkammer 4 in einen ersten Teilraum 8 und in einen zweiten Teilraum 9. Dreht sich beispielsweise der in Fig. 1 gezeigte Schwenkflügel 2 gegen den Uhrzeigersinn, wird der erste Teilraum 8 größer, während der zweite Teilraum 9 kleiner wird.

An einer Stirnseite der Druckkammer sind in der Nähe des Radialstegs 6 eine erste Öffnung 10 und eine zweite Öffnung 11 vorgesehen. Durch die Öffnungen 10, 11 kann ein Druckmedium wie beispielsweise Hydrauliköl in die Druckkammer 4 geleitet werden. Wird zum Beispiel das Druckmedium durch die erste Öffnung 10 in den ersten Teilraum 8 geleitet, baut sich dort ein Druck auf, der eine Kraft auf den Schwenkflügel 2 ausübt. Wenn gleichzeitig durch die zweite Öffnung 11 das in dem zweiten Teilraum befindliche Druckmedium abgelassen wird, dreht sich der Schwenkflügel gegen den Uhrzeigersinn und verändert seine Drehwinkelposition. Durch das geeignete Einleiten und Ablassen von dem Druckmedium lassen sich daher die durch die römischen Zahlen I bis X gekennzeichneten Positionen einstellen. In Fig. 1 liegt der Schwenkflügel 2 zwischen den Positionen VI und VII.

Der Motor 1 weist neben der ersten Öffnung 10 und der zweiten Öffnung 11 eine Zusatzöffnung 12 der Druckkammer 4 auf. Die Zusatzöffnung 12 liegt in Umfangsrichtung gesehen zwischen der ersten Öffnung 10 und der zweiten Öffnung 11. Die Zusatzöffnung 12 ist ebenfalls an der Stirnseite der Druckkammer 4 derart angebracht, dass der Schwenkflügel 2 bei einer Drehung zwischen seinen Endpositionen, die durch die Lage der ersten Öffnung 10 und der zweiten Öffnung 11 beziehungsweise durch den Radialsteg 6 festegelegt werden, die Zusatzöffnung 12 überstreicht und diese dadurch verschließt.

Fig. 2 zeigt den Motor 1 in der gleichen Darstellung wie Fig. 1. Jedoch befindet sich hier der Schwenkflügel 2 in der Position II, in der der Schwenkflügel 2 die im Querschnitt kreisförmige Zusatzöffnung 12 gerade überdeckt. Ein Drehen von der Position II in die Position I ist nur dann möglich, wenn durch die zweite Öffnung 11 Druckmedium abgelassen werden kann. Ist hingegen die zweite Öffnung 11 verschlossen, kann sich der Schwenkflügel 2 nicht über die Position II hinaus gegen den Uhrzeigersinn bewegen.

Eine diesbezügliche Schaltung einer Steuerung für den Motor 1, bei der die zweite Öffnung 11 geschlossen ist, stellt eine wirksame Sperre gegen ein Drehen des Schwenkflügels 2 in die Position I dar. Nur wenn die zweite Öffnung 11 geöffnet ist beziehungsweise offen geschaltet ist, kann sich der Schwenkflügel 2 auch in die Position I drehen. Wird der Motor 1 als Stelleinheit für ein automatisiertes Handschaltgetriebe verwendet, entspricht die Position I einem eingelegten Rückwärtsgang. Dies bedeutet, dass der Rückwärtsgang nur eingelegt werden kann, wenn die zweite Öffnung 11 offen ist. Hingegen können andere Gänge, die mit den Positionen II bis X korrespondieren, bei verschlossener Öffnung 11 eingelegt werden, da dann das Druckmedium durch die Zusatzöffnung aus dem zweiten Teilraum 9 abgeleitet werden oder, wenn sich der Schwenkflügel im Uhrzeigersinn bewegen soll, in den zweiten Teilraum 9 eingeleitet werden kann.

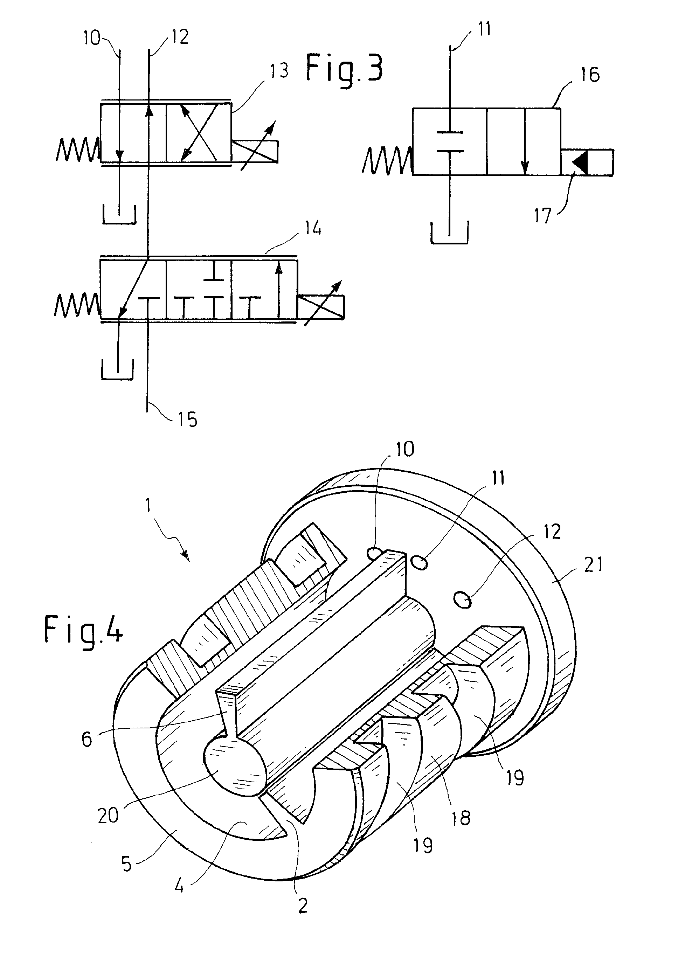

Den Öffnungen 10, 11 ist ein 4/2-Proportionalwegeventil 13 vorgeschaltet, dem wiederum ein Proportionaldruckregelventil 14 vorgeschaltet ist (siehe Fig. 3). Durch die vorgeschalteten Ventile 13, 14 lässt sich das Druckmedium von einer hier nicht weiter dargestellten Vorsorgungseinheit 15 in einen der beiden Teilräume 8, 9 einleiten, während gleichzeitig ein Ablassen des Druckmediums aus dem anderen der beiden Teilräume 9, 8 ermöglicht wird. Zusätzlich zu den Ventilen 13, 14 ist ein gesondertes Ventil 16 für die zweite Öffnung 11 vorgesehen, das dem 4/2-Proportionalwegeventil 13 nachgeschaltet sein kann. In der in Fig. 3 gezeigten Schaltposition ist das gesonderte Ventil 16 für die zweite Öffnung 11 verschlossen. In dieser Schaltposition kann sich der Schwenkflügel 2 nur von Position II bis Position X (vgl. Fig. 1 und 2) bewegen. Das Ventil 16 wird durch eine Getriebesteuerhydraulik oder durch ein Handventil 17 angesteuert.

Fig. 4 zeigt ein weiteres Ausführungsbeispiel des Motors 1 in einem perspektivischen Teilschnitt. Der Schwenkflügel 2 und der Zylindermantel 5 sind einstückig ausgebildet, sodass bei Drehung des Schwenkflügels 2 sich auch der Zylindermantel 5 dreht. An einer Außenseite 18 des Zylindermantels 5 sind zwei Steuerkurven 19 angeordnet, die jeweils als Nut im Zylindermantel 5 ausgebildet sind. Die Nuten weisen im axialer Richtung absteigende und abfallende Kurvenabschnitte auf.

An dem Radialsteg 6 ist, im Gegensatz zu dem Ausführungsbeispiel der Fig. 1, ein zylindrischer Kern 20 einstückig angeformt. Radialsteg 6, zylindrischer Kern 20 sowie eine Stirnwand 21 der Druckkammer 4 bilden eine feststehende Einheit. Durch die Stirnwand 21 greifen die Öffnungen 10 und 11 sowie die Zusatzöffnung 12 in Form von Bohrungen. Durch Drehung des Schwenkflügels 2 dreht sich der Zylindermantel 5, wodurch ein in die Nut eingreifendes Mittel (nicht dargestellt) aufgrund der absteigenden und abfallenden Kurvenabschnitte axial verstellt wird.

### Kolbenmotor mit Positionssperre

### Bezugszeichenliste

- 1: Motor
- 2: Schwenkflügel
- 3: Drehachse
- 4: Druckkammer
- 5: Zylindermantel
- 6: Radialsteg
- 7: Innenseite
- 8: erster Teilraum
- 9: zweiter Teilraum
- 10: erste Öffnung
- 11: zweite Öffnung
- 12: Zusatzöffnung
- 13: 4/2-Proportionalwegeventil
- 14: 3/3-Proportionaldruckventil
- 15: Versorgungseinheit
- 16: Gesondertes Ventil
- 17: Getriebesteuerhydraulik/Handventil
- 18: Außenseite
- 19: Steuerkurve
- 20: Zylindrischer Kern
- 21: Stirnwand

## Patentansprüche

1. Motor (1) mit wenigstens einem Kolben (2) und wenigstens einer Druckkammer (4), in der der Kolben (2) zwischen zwei Endpositionen hin und her bewegbar ist, wobei der Kolben (2) die Druckkammer (4) in einen ersten Teilraum (8) und einen zweiten Teilraum (9) unterteilt, sodass bei einer Bewegung des Kolbens (2) in eine Richtung der erste Teilraum (8) größer und der zweite Teilraum (9) kleiner wird, wobei der erste Teilraum (8) eine erste Öffnung (10) und der zweite Teilraum (9) eine zweite Öffnung (11) zum Einleiten beziehungsweise zum Ablassen eines Druckmediums aufweisen, **dadurch gekennzeichnet, dass** der Kolben (2) bei der Bewegung in eine Richtung durch Erreichen einer zwischen den zwei Endpositionen liegenden Sperrposition eine Sperre aktiviert, die eine weitere Bewegung des Kolbens (2) in die gleiche Richtung verhindert.

2. Motor (1) nach Anspruch 1, **dadurch gekennzeichnet, dass** ein Mittel vorgesehen ist, dass die Sperre löst beziehungsweise ein Aktivieren der Sperre durch den Kolben (2) verhindert.

3. Motor (1) nach Anspruch 1 oder 2, **dadurch gekennzeichnet, dass** wenigstens eine Zusatzöffnung (12) vorgesehen ist, die zum Ablassen oder Einleiten des Druckmediums dient und die der Kolben (2) in der Sperrposition verschließt.

4. Motor (1) nach Anspruch 2 oder 3, **dadurch gekennzeichnet, dass** das Mittel ein Ventil (16) aufweist, das der zweiten Öffnung (11) vorgeschaltet ist.

5. Motor (1) nach einem der Ansprüche 1 bis 4, **dadurch gekennzeichnet, dass** eine Steuerung zum Öffnen und Schließen von Ventilen (13, 14) vorgesehen ist, die der ersten Öffnung (10) und der Zusatzöffnung (12) sowie vorzugsweise auch der zweiten Öffnung (11) vorgeschaltet sind.

6. Motor (1) nach Anspruch 5, **dadurch gekennzeichnet, dass** die Steuerung in einem Normalbetrieb des Motors (1) das Ventil (16) vor der zweiten Öffnung (11) geschlossen hält, sodass sich der Kolben (2) nur zwischen einer Endposition und der Sperrposition bewegen kann.

7. Motor (1) nach einem der Ansprüche 1 bis 6, **dadurch gekennzeichnet, dass** der Kolben (2) als Rotationskolben (2) beziehungsweise als Schwenkflügel (2) ausgebildet ist.

8. Motor (1) nach Anspruch 7, **dadurch gekennzeichnet, dass** jeweils ein Teilraum (8, 9) der Druckkammer (4) durch zwei sich gegenüberstehende Stirnwände (21), durch eine Innenseite (7) eines Zylindermantels (5), durch einen Radialsteg (6) und durch den Kolben (2) begrenzt wird.

9. Motor (1) nach Anspruch 8, **dadurch gekennzeichnet, dass** die Zusatzöffnung (12) an der Innenseite (7) des Zylindermantels (5) vorgesehen ist.

10. Motor (1) nach Anspruch 8, **dadurch gekennzeichnet, dass** die Zusatzöffnung (12) an der Stirnwand (21) der Druckkammer (4) vorgesehen ist.

11. Motor (1) nach einem der Ansprüche 8 bis 10, **dadurch gekennzeichnet, dass** der Kolben (2) drehfest mit dem Zylindermantel (5) verbunden ist.

12. Motor (1) nach einem der Ansprüche 8 bis 10, **dadurch gekennzeichnet, dass** der Radialsteg (6) drehfest mit dem Zylindermantel (5) verbunden ist.

13. Motor (1) nach einem der Ansprüche 1 bis 12, **dadurch gekennzeichnet, dass** der Motor (1) als Schaltwalze eines Getriebes ausgeführt ist.

14. Motor (1) nach Anspruch 13, **dadurch gekennzeichnet, dass** an einer Außenseite (18) des Zylindermantels (5) wenigstens eine Steuerkurve (19) zum Führen einer Schaltwelle des Getriebes vorgesehen ist.

15. Motor (1) nach Anspruch 14, **dadurch gekennzeichnet, dass** die Steuerkurve (19) in Umfangsrichtung und/oder in Radialrichtung ansteigende und abfallende Kurvenabschnitte aufweist.

16. Motor (1) nach Anspruch 14 oder 15, **dadurch gekennzeichnet, dass** die Steuerkurve (19) als Nut im Zylindermantel (5) ausgebildet ist.
